# EUROPEAN PATENT APPLICATION

(11) **EP 1 650 229 A1**
(43) Date of publication of application: **26.04.2006**
(21) Application number: 04105216.8
(22) Date of filing: 21.10.2004
(51) Int. Cl.: C08F 10/00, C08F 4/70

(54) **Polyolefins prepared from two single site catalysts components in a single reactor**

(71) Applicant: TOTAL PETROCHEMICALS RESEARCH FELUY, 7181 Seneffe (Feluy) (BE)
(72) Inventor: Razavi, Abbas, 7000 Mons (BE)
(74) Representative: Leyder, Francis

(57) **Abstract**

The present invention discloses the use of two different new single site catalyst components based on different metals for preparing polymers having a broad or multimodal molecular weight distribution in a single reactor.

## Description

The present invention relates to a process for the production of an olefin polymer having a broad or bimodal molecular weight distribution. The invention also relates to the use of a catalyst system comprising two different new single site catalyst components to form polymers of the present invention. The catalyst system is advantageous, since it facilitates performance of the process in a single reactor, producing a multimodal product having a highly crystalline, low molecular weight component, and a further component having high molecular weight and low density. The catalyst systems of the presentinvention can be used in gas phase, slurry, multizone circulating reactors (MZCR) and solution processes

In many applications in which polyolefins are employed, it is desirable that the polyolefin used has good mechanical properties. It is known that, in general, high molecular weight polyolefins have good mechanical properties. Additionally, since the polyolefin must usually undergo some form of processing, such as moulding processes and extrusion processes and the like, to form the final product, it is also desirable that the polyolefin used has good processing properties. However, unlike the mechanical properties of the polyolefin, its processing properties tend to improve as its molecular weight decreases.

Imparting potentially antagonistic properties such as easy processing and high melt rigidity and toughness to high performance polyolefin resins has always posed serious challenges to scientists and engineers. It requires quite ingenious catalyst formulations and process-engineering design. Modern multi reactor, cascade process technologies employing state of the art catalysts have been used in an attempt to overcome the challenge. By judiciously controlling the conditions in each reactor, such as precise control of reactant concentrations, catalyst's residence time, and polymer block ratios, they enable sequential and in-situ production of polymer blends with intermingled chains of distinctly different lengths and compositions. In these so-called bimodal resins a compromise of counteracting properties may be reached.

Cascade reactor technologies comprise in majority two stirred tank slurry reactors, two slurry loop reactors or two gas phase reactors in series. Processes also exist wherein a combination of a loop and a fluidised bed gas phase reactor is employed. Reactor design, configuration, and conditions governing different cascade processes are quite different and may vary substantially from process to process. They all have however one distinct feature: they ensure, in one of the in series configured reactors, the production of a high density low molecular mass polymer component and in the other reactor, the production of a high molecular mass low density polymer fraction. Major challenges in all varieties of cascade technologies are:
1. Frictionless, unidirectional transfer of monomer, diluents and product from the first reactor to the second reactor, to avoid reactors cross contamination.
2. Perfectly synchronized catalysts life and residence times to ensure intimate polymer intermixing and homogenisation.
Additionally it is desired that the final bimodal exhibit well defined melt flow and density.

Each cascade technology has its own specificity.
- The stirred tank slurry process employs gaseous monomer, ethylene with hexane as the preferred solvent as disclosed for example in Boehm (J. Appl. Polym. Sci., 22, 279, 1984). Along with catalysts and co-catalyst hydrogen is fed into the first reactor to reduce the molecular mass in the first stage and butene is introduced into the second reactor to lower the density. The stirred tank technologies have simplified reactor design and are easy to operate. The low monomer partial pressure and long residence times require, however, very high catalysts activities and life times.
- In two slurry loop cascade processes, ethylene with a combination of butene/hexane or hexene/isobutane as co-monomer/solvent pair can be used. The reactors residence times are shorter and catalysts with moderate activities are tolerated. The major challenge in this type of processes is to prevent excess H₂ or co-monomer to enter into the next reactor.
- A slurry loop reactor may be combined with a fluidised bed gas phase reactor as disclosed by Borealis. The first stage, loop reactor, insures rapid start up of the production. It uses propane in supercritical phase as diluent with the advantage of introducing a large quantity of hydrogen for the production of low molecular mass fraction without the risk of H₂ bubble formation and reactor pressure instability. Additionally, polymer dissolution and reactor fouling issues are eliminated due to low solubility in propane whose critical temperature remains below polymer's melting point. The second stage, the gas phase reactor provides good density regulation and excellent product flexibility.

Ziegler-Natta catalysts are predominantly used in cascade technologies. They fulfil conditions, such as moderate to high activities, good hydrogen response and co-monomer incorporation capability imposed by the cascade process. Their good thermal and chemical stability guarantees that they survive the relatively long overall residence times of the reactors. They produce however short polymer chains in the high molecular weight low-density fraction that remain in the amorphous phase, and do not contribute to tie molecules formation. Additionally, the branch rich, non-crystallisable low molecular weight material generally leads to de-mixing and phase separation and is not favourable to mechanical properties.

Single site catalysts in general and metallocenes in particular are ideally suited to be used in cascade technologies for the production of both fractions of bimodal polyethylene. Selected bridged metallocene catalysts with excellent hydrogen response and co-monomer incorporation capabilities allow the easier production of the bimodal polyethylene without excessive use of hydrogen and co-monomer, and therefore with little or no risk of the second reactor contamination. Their application is particularly advantageous since their narrow disperse polymers, permit precise design of the composition of each fraction particularly that of the low density, high molecular mass fraction. In metallocene based copolymer the branches are statistically distributed and are very effective in assisting tie molecule formation and preventing chains longitudinal diffusion and lateral slippage.

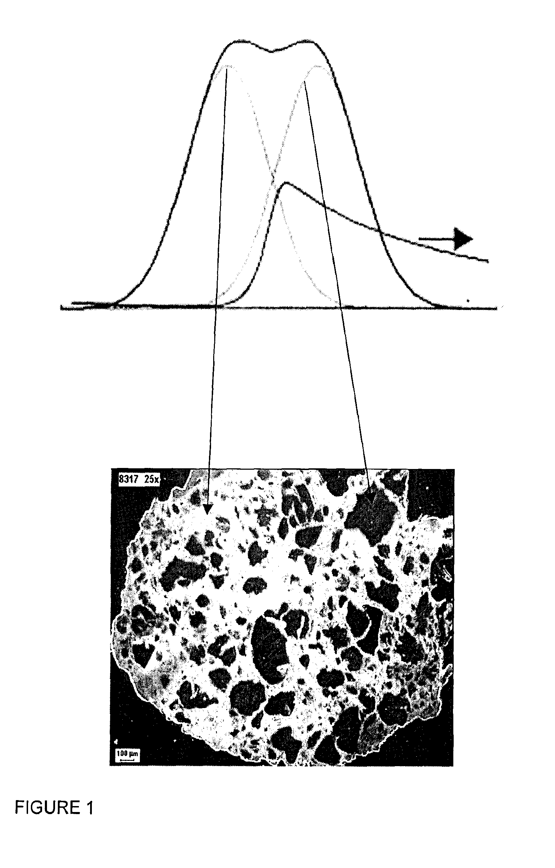

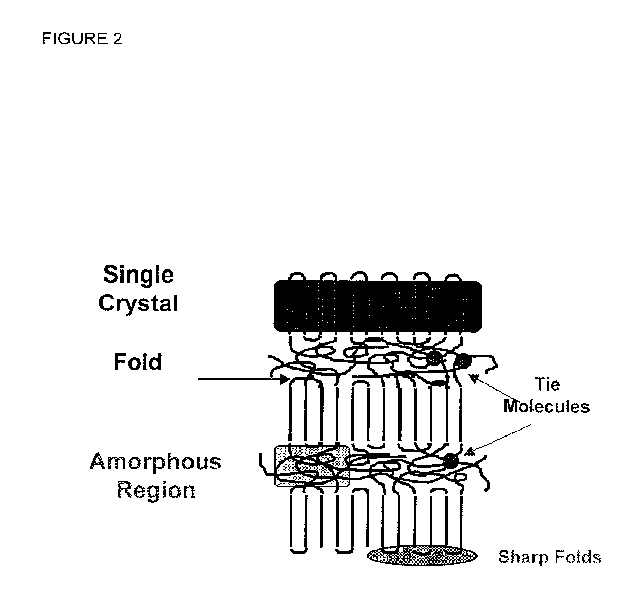

In cascade processes, polymer particle formation starts with catalyst particles being gradually fragmented by infused layers of high density and low-density polymer fractions in tandem reactors to finally become polymer particles. The solid-state morphology of the resulting polyethylene is that of a biphasic polymer alloy, in which the high-density, homo-polymer component acts as the matrix for the low-density copolymer part as can be seen in Figure 1. The high molecular mass copolymer chains traverse several crystalline and amorphous layers and interconnect adjacent crystalline lamellae as tie molecules. Tie molecules density is directly related to the chain length, molecular weight distribution (MWD), number and type of the side branches and the semi-crystalline morphology for a given lamellar thickness. They determine material's long- and short-term resistance to environmental and/or mechanical stress. In bimodal systems, the crystalline domain defines low strain rate of semi-crystalline polymers such as modulus, yield stress and slow crack growth properties whereas the amorphous region determines the high strain properties such as impact, tear and fracture resistance. The concentration of the tie molecules determines both the low and high strain rate behaviour. A high concentration of tie molecules can prevent or stop for example the brittle failure that is occasionally initiated, even at low stress, by a small crack and formation of a crazing zone. The crazing zone is formed by highly oriented fibrils under the applied stress concentration and is postulated to be due to disentanglement of tie molecules connecting the micro crystallites and fracture of the fibril. The resistance to fracture is thought to improve by incorporation of various types of branches the long branches being more effective. Branches are predominantly concentrated on tie-molecules that resist the chain pull out through the formation of micro-fibrils: they impede slow crack growth by reducing lamellar thickness and by decreasing the susceptibility to craze initiation and development. Branches also serve to pin-down tie molecules, which are a priori less mobile than their linear counterparts. The pinning of branches at the crystal fold surface and represented in Figure 2 is thought to be responsible for the very high fracture toughness of low density polyethylene (LDPE). High fracture toughness is achieved in the longest branched chains that form tie-molecules. It is also equally important to optimise fracture toughness by regularly spacing the branches, as for example in low-density polyethylene produced with metallocene. The inter branch spacing sets the upper boundary to the effective molecular weight for tie-molecules.

The only disadvantage of using single site catalysts in cascade processes to produce bimodal polyolefin is the difficult homogenised extrusion due to very narrow molecular weight distribution of the two polymer fractions and to the lack of overlapping consisting of chains with intermediate molecular weight distribution. This is caused by non-ideal residence time distribution, which independent of the catalytic system in use, cause some catalyst grains to leave the firtst reactor without any polymerisation and some catalyst grains to stay too long to be solely covered with asingle fraction. The only remedy for this problem is the use of dual (or multiple) site catalysts in a single reactor. In this case each catalyst particle will have the compositional ratio of the low and high molecular weight fraction which have been pre-designed by the composition of its individual active sites. The close proximity of the two fractions makes the homogeneous extrusion possible.

Production of polyolefin with a bimodal MWD in a single reactor has long been a goal of the polyolefin industry because single reactor configurations are significantly cheaper to build, have improved operability, and enable quicker product transitions than multi-reactor configurations. A single reactor can also be used to produce a broader range of products than can a set of cascaded reactors. Producing a resin having a bimodal MWD in a single reactor requires however highly sophisticated catalytic systems with at least two very different active site populations. It was thought that metallocenes, with their vast structural diversity, could provide highly chemo-selective active site structures with distinctly different hydrogen and co-monomer response and thereby provide a facile route to dual site catalysts. The area of dual site single reactor systems has been the object of a lot of efforts by the present applicant such as disclosed for example in US-A-6255428, EP-A-0790259, US-A-6410476, WO/03029302, US-A-6380311, US-A-5914289, EP-A-830395, or US-a-5719241. The method however still needs much improvement.

### List of Figures.

Figure 1 represents the molecular weight distribution of a bimodal polyethylene resin and its relation to the dispersion of the low density fraction, represented by the dark areas, in the high density matrix, represented by the light areas.
Figure 2 is a schematic representation of semi-crystalline polyethylene.
Figure 3 represents the log/log curve of stress as a function of time for a bimodal polyethylene, showing the transition between ductile and brittle behaviours.

Many applications still require improved polyolefins and there is still a need to control the molecular weight distribution and the branches distribution of the polyolefin products more closely, so that the miscibility of the polyolefin components can be improved, and thus the mechanical and processing properties of the polyolefins. In particular it is desirable to improve the catalyst system employed in the manufacture of multimodal polyolefins, in order to achieve these improvements in the polymers themselves.

It is an object of the present invention to solve the problems associated with the above prior art by providing an improved catalyst system.

It is also an object of the present invention to provide an improved method for the formation of olefin polymers, employing new catalyst systems.

It is a further object of the present invention to develop a method that is capable of forming multimodal, particularly bimodal, olefin polymers, preferably in a single reactor.

It is another object of the present invention to control the branches distribution in polymers.

Accordingly, the present invention provides a catalyst composition for the production of an olefin polymer having a broad or multimodal molecular weight distribution, that comprises two (groups of) new single site catalyst components respectively of formula (I)

(L) ₙM(Q)ₚ (I)

and of formula (II)

(L')_{n'}M'(Q')_{p'} (II)

wherein L and L' are heteroatom-containing ligands; n and n' are integers of 1, 2, or 3; M and M' are selected from Ti, Zr, Sc, V, Cr, Fe, Co, Ni, Pd, or a lanthanide metal; each Q or Q' is independently a hydrocarbon having 1-20 carbon atoms or a halogen; p and p' are respectively the valences of M and M' minus the sum of the coordination numbers of L or L', and wherein M and M' are different.

Preferably the catalyst composition of the present invention comprises an iron-based new single site catalyst component and a nickel-based new single site catalyst component.

In a preferred embodiment according to the present invention, the iron-based new single site catalyst component is a compound of formula (III) 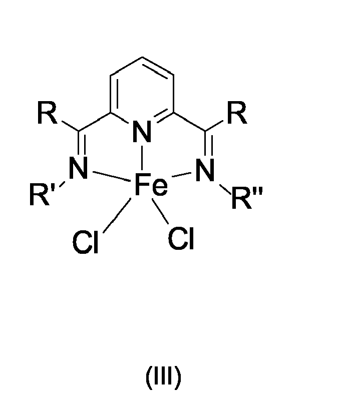 wherein R are the same and are alkyl groups having from 1 to 20 carbon atoms, preferably 1 to 6 carbon atoms and more preferably methyl groups, R' and R" are the same or different and are alkyl groups having from 1 à 20 cabon atoms substituted or unsubstituted or aryl groups having from 1 to 20 carbon atoms substituted ou unsubstituted.

Preferably, R' and R" are the same or different and are selected from a substituted or unsubstituted alkyl having from 1 to 6 carbon atoms or are a unsubstituted or substituted aryl. The aryls group can themselves be substituted with alkyls having from 1 to 6 carbon atoms or with substituted or unsubstituted aryls having from 1 to 6 carbon atoms. More preferably, R' and R" are different and comprise substituted phenyls. Most preferably, R' is a phenyl substituted with methyls in positions 2 and 6 and R" is an anyline substituted by two phenyls, each being substituted by a tert-butyl.

The steric environment of the iron-based complex is determined by the substituents at positions 2 and 6 and optionally at positions 3, 4 and 5 on the phenyls.

For the steric effect, the preferred substituents on the phenyls, if present, can be selected from tert-butyl, isopropyl or methyl. The most preferred substituents are methyls in positions 2 and 6 for R' and substituted phenyls in positions 2 and 6 for R".

In a preferred embodiment according to the present invention, the nickel-based bis iminie new single site catalyst component is a compound of formula (IV) 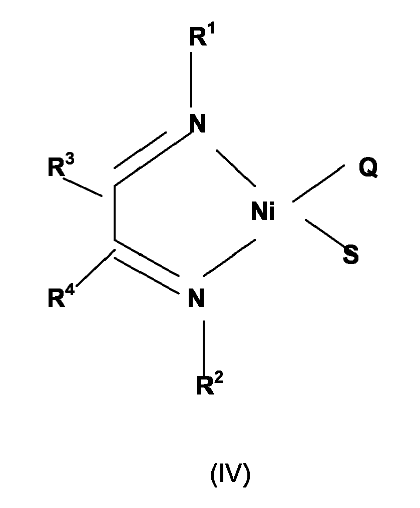 wherein Q is alkyl, hydride, chloride, iodide or bromide;
wherein S is is alkyl, hydride, chloride, iodide or bromide and when both each Q and S are each independently chloride, iodide or bromide, the compound is capable of transferring a hydride or alkyl group to Ni and if Q and/or S is alkyl, it is preferred that the alkyl contains from 1 to 4 carbon atoms and more preferably it is methyl;
wherein R¹ and R²' are each independently hydrocarbyls or substituted hydrocarbyls, provided that the carbon atom bound to the nitrogen has at least two carbon atoms bound to it; preferably they are the same and they are substituted or unsubstituted aryls groups, more preferably phenyl groups preferably substituted and most preferably di-substituted phenyl groups in positions 2 and 6,
and wherein R³ and R⁴ are independently hydrogen, hydrocarbyls or substituted hydrocarbyls or R³ and R⁴ taken together are hydrocarbylene or substituted hydrocarbylene to form a carboxylic ring and preferably, R³ and R⁴ are each independently hydrogen or hydrocarbyl.

Alternatively, the nickel complex may be a compound of formula V 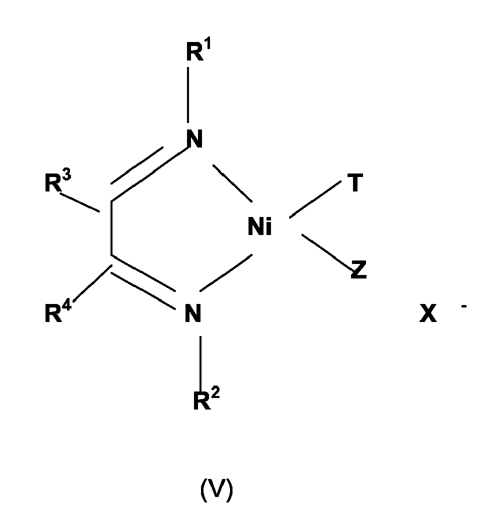 wherein R¹, R², R³ and R⁴ are as defined hereabove;
wherein T is hydrogen, hydrocarbyl not containing olefinic or acetylenic bonds, R⁵C(=O) or R⁵OC(=O) wherein R⁵ is hydrovarbyl not containing olefinic or acetylenic bonds and preferably T is alkyl, more preferably, it is methyl;
wherein Z is a neural Lewis base wherein the donating atom is nitrogen, sulfur or oxygen, provided that, if the donating atom is nitrogen, then the pKa of the conjugate acid of that compound is less than 6 and preferably Z is R⁶₂O or R⁷CN, wherein each R⁶ or R⁷ is preferably hydrocarbyl, more preferably alkyl and most preferably methyl or ethyl;
and wherein X is a weakly coordinating anion, preferably, tetrakis[3,5-bis(trifluoromethyl)phenyl] borate (BAF⁻), SbF6-, PF₆⁻ or BF₄⁻.

When an iron-based single site complex is used in the copolymerisation of ethylene with a comonomer, it is observed that the comonomer is not incorporated in the backbone of the polymer chain. A highly crystalline ethylene copolymer without branches is obtained. The molecular weight of the polymer is however reduced and it is believed that the comonomer acts as a chain transfer agent. Additionally, in the absence of external comonomer, Fe-complexes that produce intrinsically low molecular weight high density polyethylene, can be employed The comonomer is an alpha-olefin having from 3 to 8 carbon atoms, preferably it is hexene.

The nickel-based complex produces polymers having a large number of branches even in the absence of external comonomer. The length of branches does not necessarily correspond to the original sizes of any of the monomers used or if they do there may be more branches of that particular length in the final polymer than there were monomers corresponding to that branch length. Additionally, the polymers have branches of at least two different lengths. The size and the number of the branches can be controlled by the substituents and polymerisation conditions.

An active catalyst system is prepared by adding an appropriate activating agent.

Any activating agent having an ionising action known in the art may be used for activating the metallocene component. For example, it can be selected from aluminium-containing or boron-containing compounds.

The aluminium-containing compounds comprise aluminoxane, alkyl aluminium and/or Lewis acid.

Suitable boron-containing activating agents that can be used comprise a triphenylcarbenium boronate such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

The catalyst system of the present invention is used in the homo - or co-polymerisation of alpha-olefins. The polymers obtained with the catalyst system of the present invention have a broad or bimodal molecular weight distribution. The molecular weight distribution is defined by the polydispersity index that is the ratio Mw/Mn of the weight average molecular weight Mw over the number average molecular weight Mn.

Preferably, the olefin is propylene or ethylene, more preferably, it is ethylene.

The combination of a nickel-based new single site catalyst component and of an iron-based new single site catalyst component is particularly beneficial in the production of bimodal polyethylene.
- The nickel-based component is responsible for producing branching.
- The iron-based single site component, responsible for the low molecular weight fraction of the polymer either produces intrinsically low molecular weight polymer, or in the presence of a comonomer does not require the presence of hydrogen to terminate the chains.

In the presence of the iron-based catalyst component, increasing the comonmer concentration, if the comonomer is needed, thus reduces the molecular weight of the low molecular weight fraction.

In the presence of the Ni-based catalyst component, increasing monomer pressure, especially if the monomer is ethylene, reduces the amount of branching but increases the productivity of the catalyst and the molecular weight of the polymer. Increasing the temperature results in increasing the branching and decreasing the molecular weight of the polymer.

Instead of introducing the comonomer in the reaction zone, an oligomerisation catalyst system may d be added for preparing the comonomer *by* in situ. oligomerisation of ethylene, catalysts systems are known by the man skilled in the art. Among the preferred oligomerisation catalyst system, one can cite for example the octanuclear nickel complex disclosed in international patent application PCT/EP2004/002145.

The invention also discloses a method for preparing a catalyst system that comprises the steps of:
a) providing a first new single site catalyst component of formula (L) ₙM(Q)p wherein L is an heteroatom-containing ligand; n is an integer of 1, 2, or 3; M is selected from Ti, Zr, Sc, V, Cr, Fe, Co, Ni, Pd, or a lanthanide metal; each Q is independently a hydrocarbon having 1-20 carbon atoms or a halogen; and p is the valence of M minus the sum of the coordination numbers of all L;
b) providing a second new single site catalyst component of formula (L')_{n'}M'(Q')_{p'} wherein L', Q', M', n' and p' are as defined above respectively for L, Q, M, n and p and wherein M' is different from M;
c) optionally providing an oligomerisation catalyst system;
d) providing an activating agent;
e) optionally providing a cocatalyst;
f) retrieving an active catalyst system.

Optionally, the catalyst components are supported on the same or on different supports.

The present invention also provides a process for producing a polyolefin having a bimodal molecular weight distribution, the process generally comprising the steps of:
(a) introducing the catalyst system of the present invention comprising two different new single site catalyst components into the reactor;
(b) injecting the monomer and optional comonomer into the reactor;
(c) maintaining under polymerisation conditions;
(d) retrieving a polymer having a bimodal molecular weight distribution.

In the method of the invention, the molecular weight distribution of the first polyolefin component overlaps with the molecular weight distribution of the second polyolefin component, thus forming a polymer product that has at least a bimobal molecular weight distribution.

Thus, the present invention utilises at least two catalyst components for producing at least two polymer components, each component forming part of the multimodal polymeric product. It is preferred that two catalysts are employed, and a bimodal polymer product is produced. However, the invention is not limited to bimodal products only, and multimodal polymers may be produced if desired.

In a particularly preferred embodiment of the present method, the polymerising steps take place in a single reaction zone, under polymerising conditions in which the catalysts producing the polymer components are simultaneously active.

Many known procedures for forming multimodal polyolefins have employed a different reactor for forming each component. The methods of the present invention are particularly advantageous, since they allow for the production of improved olefin polymers from a single reactor. This is because the catalysts employed in the present invention are more effective than known catalysts, particularly when utilised simultaneously in the same reactor. This has two distinct advantages. Firstly, since only a single reactor is required, production costs are reduced. Secondly, since the components are all formed simultaneously, they are much more homogeneously blended than when produced separately.

Although polymerisation in a single reactor is particularly preferred, the catalysts employed in the present invention are still particularly effective in producing the required polyolefin components of a multimodal product even when these components are produced in separate reactors. Accordingly, in some embodiments, separate reactors may be employed for forming some or all of the components, if desired.

Although the invention may be applied to any olefin polymerisation, the olefin monomer employed typically comprises ethylene and/or propylene. Bimodal or multimodal polyethylene is the most preferred product.

The catalyst systems employed in the present invention may be employed in any type of co-polymerisation method, provided that the required catalytic activity is not impaired. In a preferred embodiment of the present invention, the catalyst system is employed in a slurry process, which is heterogeneous. Preferred supports include a porous solid support such as talc, inorganic oxides and resinous support materials such as polyolefin. Preferably, the support material is an inorganic oxide in its finely divided form.

Suitable inorganic oxide materials are well known in the art. Preferably, the support is a silica support having a surface area of from 200-700 m²/g and a pore volume of from 0.5-3 ml/g.

The amount of activating agent and metallocene usefully employed in the preparation of the solid support catalyst can vary over a wide range and depend upon the nature of the activating agent.

The order of addition of the catalyst components and activating agent to the support material can vary. In accordance with a preferred embodiment of the present invention activating agent dissolved in a suitable inert hydrocarbon solvent is added to the support material slurried in the same or other suitable hydrocarbon liquid and thereafter a mixture of the catalyst components is added to the slurry.

Preferred solvents include mineral oils and the various hydrocarbons which are liquid at reaction temperature and which do not react with the individual ingredients. Preferably, the support material is slurried in toluene and the catalyst components and activating agent are dissolved in toluene prior to addition to the support material.

The present invention also provides an olefin polymer, obtainable according to a method as defined above. The most preferred polymer obtainable according to the present invention is high density polyethylene (HDPE).

Also provided is the use of a dual catalyst system for producing an olefin polymer.

Resins having a bimodal molecular weight distribution can be used in high density, blown film, application where they offer an attractive combination of rheological properties in terms of shear response, low die swell, and high melt strength and of physico- mechanical properties such as clarity/low gel, tear strength, Environmental Stress Crack Resistance (ESCR). They further offer a good compromise of stiffness and impact resistance. These high-density polyethylene (HDPE) films are easy to process and allow down gauging and cost saving measures.

Blow moulding grades have excellent processing capabilities because of their low die swell and high melt strength. They also have good mechanical properties in terms of stiffness and ESCR. The containers prepared with the resins of the present invention can thus have thin walls, thereby requiring less material, and yet evince the resins having the best combination of top-load and ESCR.

Pressure pipe for natural gas and drinking water distribution, is another fast growing application for bimodal HDPE. The performance criteria for pressure pipes are processability during the extrusion through annular dies as well as short and long term performance properties requiring resistance to environmental (chemical and mechanical) stress ESCR, Slow Crack Growth (SCG), and Rapid Crack Propagation (RCP). They must compete with incumbent materials such as concrete and steel having long service lives of over 50 years.

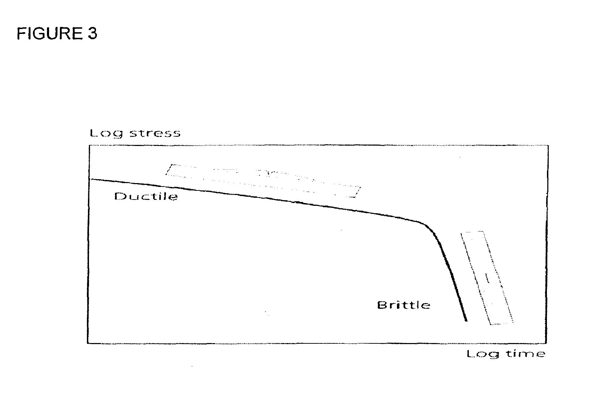

High performance pipes produced with the bimodal resin according to the present invention have the ability to resist short and long term failure mechanism such as growth of an incidental crack in the pipe over long periods of time under constant pressure (SCG), and resistance to RCP as a results of impact of a sharp object (impact failure). Additionally and most importantly, they exhibit high creep rupture strength (high modulus, high stiffness). The service lifetime is estimated via Long-Term Hydrostatic Strength (LTHS) that is determined by Minimum Required Stress (MRS) tests. These tests require a series of pressure/ failure time curves established at different temperatures with a number of pipes having prescribed length, diameter and wall thickness. Calculations and extrapolations are then carried out following the method developed by Schulte (U. Schulte in 100 Jahre Lebensdauer; Kunststoffe, 87, p. 203, 1997.), and a Hooks stress/ service time curve of well over 50 years at 20°C is obtained. The curve, represented in Figure 3, exhibits three distinct regions.

After a short experiment time, a flat region in which at high stress the tested pipes failed in a ductile mode. After a very long experiment time, another region characterised by a very steep descent, during which the tested pipes, via a thermo-oxidative initiated change, failed in brittle mode. In between, there is a less pronounced intermediate region characterized by a ductile/ brittle transition "knee". According to current results, metallocene based PE100 resin with ideal balance in fractional polymer properties has service life times of over a century. The classification PE100 is based on MRS at a temperature of 80°C, a pressure of 5 Mpa for a period of time of 1000h according to the method of the ISO norm TR 9080.

## Claims

1. A catalyst composition for the production of an olefin polymer having a broad or multimodal molecular weight distribution, that comprises two new single site catalyst components respectively of formula (I)
(L)ₙM(Q)ₚ (I)
and of formula (II)
(L')_{n'}M'(Q')_{p'} (II)
wherein L and L' are heteroatom-containing ligands; n and n' are integers of 1, 2, or 3; M and M' are different and are each selected from Ti, Zr, Sc, V, Cr, Fe, Co, Ni, Pd, or a lanthanide metal; each Q or Q' is independently a hydrocarbon having 1-20 carbon atoms or a halogen; and p and p' are respectively the valence of M and M' minus the sum of the coordination numbers of L or L'.

2. The catalyst composition of claim 1 wherein M is iron and M' is nickel.

3. The catalyst composition of claim 3 wherein (L)ₙM(Q)ₚ is represented by formula (III) 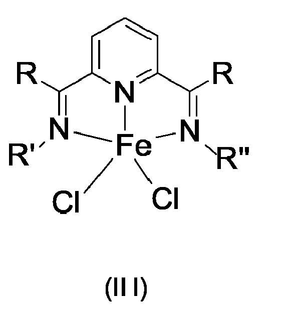 wherein R are the same and are alkyl groups having from 1 to 20 carbon atoms, preferably 1 to 6 carbon atoms and more preferably methyl groups, R' and R" are the same or different and are alkyl groups having from 1 à 20 cabon atoms substituted or unsubstituted or aryl groups having from 1 to 20 carbon atoms substituted ou unsubstituted.

4. The catalyst composition of claim 3 wherein wherein R' and R" are different and comprise substituted phenyls.

5. The catalyst composition of claim 2 wherein (L')ₙ,M'(Q')ₚ, is represented by formula IV 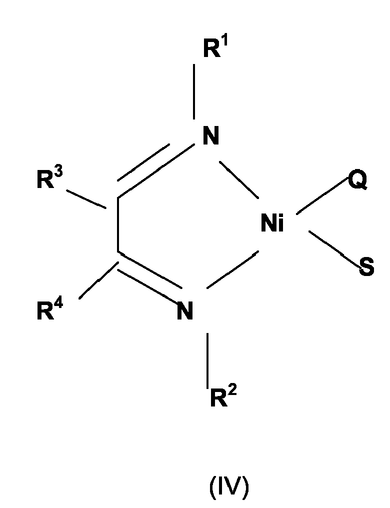 wherein Q is alkyl, hydride, chloride, iodide or bromide;
wherein S is alkyl, hydride, chloride, iodide or bromide and when both each Q and S are each independently chloride, iodide or bromide, the compound is capable of transferring a hydride or alkyl group to Ni;
wherein R¹ and R² are each independently hydrocarbyls or substituted hydrocarbyls, provided that the carbon atom bound to the nitrogen has at least two carbon atoms bound to it;
and wherein R³ and R⁴ are independently hydrogen, hydrocarbyls or substituted hydrocarbyls or R³ and R⁴ taken together are hydrocarbylene or substituted hydrocarbylene to form a carboxylic ring
or a complex of formula V 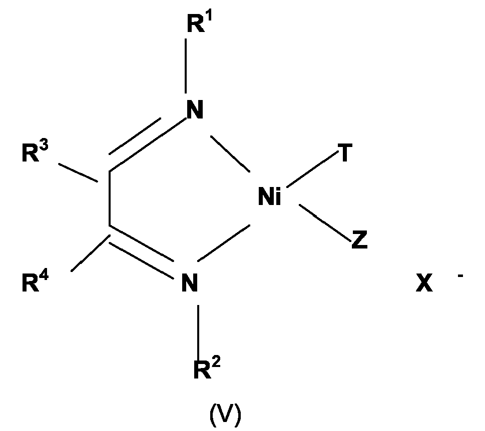 wherein R¹, R², R³ and R⁴ are as defined hereabove;
wherein T is hydrogen, hydrocarbyl not containing olefinic or acetylenic bonds, R⁵C(=O) or R⁵OC(=O) wherei R⁵ is hydrovarbyl not containing olefinic or acetylenic bonds;
wherein Z is a neural Lewis base wherein the donating atom is nitrogen, sulfur or oxygen, provided that, if the donating atom is nitrogen, then the pKa of the conjugate acid of that compound is less than 6
and wherein X is a weakly coordinating anion.

6. The catalyst composition of claim 5 wherein Q and/or S is alkyl containing from 1 to 4 carbon atoms preferably methyl.

7. The catalyst composition of claim 5 or claim 6 wherein R¹ and R² are the same and they are substituted or unsubstituted aryls groups.

8. The catalyst composition of claim 7 wherein R¹ and R² are both substituted phenyl groups.

9. The catalyst composition of any one of claims 5 to 8 whereinT is alkyl preferably methyl.

10. The catalyst composition of any one of claims 5 to 9 wherein Z is R⁶₂O or R⁷CN, wherein each R⁶ or R⁷ is methyl or ethyl.

11. The catalyst composition of any one of claims 5 to 10 wherein X is tetrakis[3,5-bis(trifluoromethyl)phenyl] borate (BAF⁻), SbF₆⁻, PF₆⁻ or BF₄⁻.

12. An active catalyst system comprising the catalyst composition of any one of claims 1 to 11 and an activating agent.

13. A method for preparing an active catalyst system that comprises the steps of:
a) providing a first new single site catalyst component of formula (L)ₙM(Q)ₚ according to any one of claims 1 to 4;
b) providing a second new single site catalyst component of formula (L')ₙ,M'(Q')ₚ, according to any one of claims 1 and claims 5 to 11;
c) optionally providing an oligomerisation catalyst system;
d) providing an activating agent;
e) optionally providing a cocatalyst;
f) optionally providing a support;
g) retrieving an active catalyst system.

14. A method for homo- or co-polymerising olefins that comprises the steps of:
a) introducing the active catalyst system of claim 12 into the reactor;
b) injecting into the reactor the monomer and optional comonomer into the reactor;
c) maintaining under polymerisation condition;
d) retrieving the polymer.

15. The method of claim 14 wherein the monomer is ethylene or propylene.

16. The method of claim 14 or claim 15 wherein the polymerisation process is selected from gas phase, slurry, solution or multizone circulating reactor processes.

17. Olefin polymer having a broad or bimodal molecular weight distribution obtainable by the process of any one of claims 14 to 16.

18. Use of the method of any one of claims 14 to 16 for preparing a polymer having a broad or bimodal molecular weight distribution.

19. Use of the method of any one of claims 14 to 16 for preparing a polymer having a large amount of branching.
